# EUROPEAN PATENT SPECIFICATION

(11) **EP 3 988 611 B1**
(45) Date of publication and mention of the grant of the patent: **28.08.2024**
(21) Application number: 20202960.9
(22) Date of filing: 21.10.2020
(51) Int. Cl.: C08L 19/00

(54) **RUBBER MIXTURE USED FOR MAKING A BAG**
KAUTSCHUKMISCHUNG ZUR HERSTELLUNG EINES BEUTELS
MÉLANGE DE CAOUTCHOUC UTILISÉ POUR LA FABRICATION D'UN SAC

(43) Date of publication of application: 27.04.2022
(73) Proprietor: Center Gomma S.R.L., 60035 Jesi (AN) (IT)
(72) Inventor: BAIONI, Gianluca, JESI (AN) (IT); BAIONI, Gabriele, JESI (AN) (IT)
(74) Representative: Baldi, Claudio

(56) References cited:
- US-A1- 2013 085 223
- SONEPA RUBBER SCRAP RECYCLING INDUSTRIES ET AL: "unvulcanized rubber compounds scrap tire production waste,green tyre,nylon friction, steel friction Rubber Scrap,SBR,NR, NBR,butyl PBR,IIR,VI,SIL,NR,CSM,PCR,FKM,CIIR,camelback treads,Carbon black N220,N330,N660, cut treads, butyl bagomatic bladder, butyl tubes, rejected tire cut,unvulcanised rubber", 9 August 2008 (2008-08-09), pages 1 - 5, XP055654655, Retrieved from the Internet <URL:http://www.sonepa.com/rubber-ph.html> [retrieved on 20200101]
- DATABASE WPI Week 200949, Derwent World Patents Index; AN 2009-L52663, XP002802577

## Description

The present patent application for industrial invention relates to a rubber mixture used for making a bag, a case, and the like.

More precisely, the present patent application relates to a rubber mixture that is vulcanized to obtain a rubber sheet with the characteristics and the properties that are typical of real leather, in such a way to be used as "raw material" for the production of bags, cases and the like.

In particular, the rubber mixture of the present patent invention was devised to produce motorcycle bags.

Motorcycle bags can be divided into two categories: rigid motorcycle bags and soft motorcycle bags.

Rigid motorcycle bags are made of plastics, metal or fibers and resins. Rigid motorcycle bags are impaired by the fact that they cannot be expanded and are not aesthetically pleasant.

Soft motorcycle bags are mainly made of leather. The advantage of soft motorcycle bags consists in the fact that they are lightweight and practical. Moreover, soft motorcycle bags are often made by hand and are therefore available with different shapes, sizes and styles.

Soft motorcycle bags are made of good quality leather that is waterproof, soft, aging-resistant, and easy to handle, cut and sew.

However, soft motorcycle bags are very expensive and many users prefer to purchase and use rigid motorcycle bags.

Sonepa Rubber Scrap Recycling Industries ET AL: "unvulcanized rubber compounds scrap tire production waste, green tyre, nylon friction, steel friction Rubber Scrap, SBR, NR, NBR, butyl PBR, IIR, VI, SIL, NR, CSM, PCR, FKM, CIIR, camelback treads, Carbon black N220, N330, N660, cut treads, butyl bagomatic bladder, butyl tubes, rejected tire cut, unvulcanised rubber", 9 August 2008, discloses a mixture for obtaining uncured rubber scrap from tire production. This mixture comprises:
- recycled rubber obtained from the recycling of tires during production;
- a polymer base with cross-linked unsaturated chain (SBR, NR);
- reinforcing charges (black carbon).

US2013/085223 A1 discloses a rubber composition for the manufacture of tires, based on one or more diene elastomers (i.e. EPDM), on one or more reinforcing fillers and on a vulcanization system.

The purpose of the present invention is to disclose a rubber mixture suitable for providing a rubber sheet that can be used in the same way as real leather.

Another purpose of the present invention is to disclose a rubber mixture suitable for providing a rubber sheet that can be manipulated by a user in total safety.

An additional purpose is to disclose a motorcycle bag that is resistant and aesthetically pleasant.

These purposes are achieved according to the invention with the characteristics of the appended independent claim 1.

Advantageous embodiments appear from the dependent claims.

The rubber mixture according to the invention is defined by claim 1.

The rubber mixture of the invention was devised to obtain a vulcanized sheet that can be used to produce a bag, a case or the like.

It must be noted that, although in the present patent application the rubber sheet obtained from the vulcanization of the rubber mixture is used for making a motorcycle bag, the same rubber sheet can be advantageously used for making any sort of cases or items for the design industry.

Before obtaining the rubber mixture suitable for producing said rubber sheet, the applicant carried out several tests with the purpose of obtaining a sheet that could be used in the same way as real leather. In order to be processed to produce a bag, in addition to having physical characteristics that are similar to the ones of textiles or leather, the rubber sheet must guarantee the total safety of a user. More precisely, the bag obtained from processing the rubber sheet obtained from the rubber mixture must be safe for the user because of its potential daily use.

Therefore, the rubber mixture must pass several tests that measure the presence of chemical substances that may be harmful for the user. Said tests are regulated by the Regulation (EC) 1907/2006 (Reach).

The applicant initially attempted to obtain a rubber mixture that exclusively comprised recycled rubber obtained from production processes of tires before vulcanization.

However, such a solution proved not suitable because the mixture contained an excessive quantity of products that did not comply with the provisions of the Regulation (EC) 1907/2006 (Reach) on the final use of the rubber mixture.

The negative results are due to the fact that the recycled rubber obtained from production processes of tires that has not yet been vulcanized contains harmful substances, such as:
- alkylphenols and alkylphenol ethoxylates, i.e. compounds used as anti-oxidant in the tire rubber industry, which cause hormonal alterations in man;
- polycyclic aromatic hydrocarbons (PAH), such as carbon black, which is used to give some properties to the rubber mixture, like strength and the typical black color; because of their chemical structure, said polycyclic aromatic hydrocarbons (PAH) act as DNA-intercalating agents and for this reason they are considered compounds with mutagen and carcinogenic activity;
- phthalates, which are substances used to increase the modellability and the flexibility of rubber products; a prolonged contact with the skin of a user causes a bio-accumulation in the body with associated toxicity for the reproductive system.

In view of the negative results, in order to reduce the presence of said harmful substances in the rubber mixture and obtain a rubber mixture that is not harmful for man and is provided with values that comply with the Regulation (EC) 1907/2006 (Reach), the applicant decided to mix the recycled rubber obtained from production processes of tires that has not yet been vulcanized with another mixture in order to reduce the percentage of said harmful substances that are dangerous for a user.

Therefore, the rubber mixture of the present invention comprises:
- recycled rubber obtained from production processes of tires that has not yet been vulcanized;
- a polymer base with cross-linked unsaturated chain;
- a vulcanization group that favors the vulcanization of the rubber mixture;
- reinforcing charges;
- protective substances.

The polymer base with cross-linked unsaturated chain comprises natural polyisoprene (natural rubber) and styrene butadiene (or synthetic rubber SBR).

The reinforcing charges of the rubber mixture according to the invention comprise silica and a mixture of silica, sodium oxide and aluminum oxide. The use of said mixture of silica, sodium oxide and aluminum oxide is totally safe because it contains no harmful substances according to the Reach European Regulation.

Said vulcanization group comprises a vulcanization activator, in particular zinc oxide (ZnO) and a vulcanization accelerator, in particular accelerator CBS.

As it can be noted, the vulcanization group is totally free of sulfur, which is the most popular vulcanization substance used in the chemical industry and is the substance that gives a strong, persistent odor to the vulcanized mixture. Such a decision was taken to minimize the presence of sulfur in the rubber mixture and consequently reduce the persistent odor of the rubber mixture.

The protective substances improve aging, protect the rubber mixture against weather agents and give a good ozone resistance to the rubber mixture. For illustrative purposes, said protective substances comprise protective agents, such as wax, 6PPD, and TMQ.

The rubber mixture comprises a percentage of said recycled rubber comprised between 55% and 65%.

Instead, the percentage of said polymer base with cross-linked unsaturated chain is comprised between 20% and 30%.

Additionally, the rubber mixture comprises essential oils to reduce and neutralize the odor of rubber. Preferably, said essential oils comprise a sweet orange essential oil.

Following is a description of the production process of a rubber sheet obtained with the rubber mixture according to the invention.

The production process of the rubber sheet according to the invention comprises the steps of:
- provisioning, wherein the recycled rubber obtained from production processes of tires that has not yet been vulcanized, the polymer base with cross-linked unsaturated chain, the reinforcing charges, the vulcanization group, the protective substances and the essential oil are provided;
- mixing, wherein the elements provided in the step of provisioning are mixed with a cylinder mixer (technically defined as "Bambury machine") comprising a presser and two rotors that work in an intermeshing way; the presser compresses the elements on the rotors; the pressure of the presser on the rotors and the friction of the elements against the rotors overheats the elements to obtain a first mixture;
- homogenizing, wherein the product obtained from the step of mixing is homogenized by means of an ordinary open mixer to obtain a homogeneous mixture;
- calendering, wherein the homogeneous mixture obtained from the step of homogenizing is processed with an ordinary calender to obtain a plate with the desired thickness;
- cutting, wherein the plate is cut in order to obtain a sheet;
- vulcanizing, wherein the sheet obtained from the step of cutting is vulcanized.

In order to obtain a "leather" effect and give the rubber sheet an aspect similar to real leather, the vulcanization of the rubber sheet is made by means of a mold with the following vulcanization parameters:
- Pressure: 170 bar;
- Temperature: 160 °C;
- Vulcanization time: 3 minutes/millimeter.

Following is a merely illustrative, not limiting quantitative example of the rubber mixture according to the invention; said rubber mixture comprises:
- 59.8% of said recycled rubber;
- 22.8% of said polymer base with cross-linked unsaturated chain, in particular 6% of said natural rubber and 16,8% of said synthetic rubber SBR;
- 14.8% of said reinforcing charges, in particular 6% of said silica and 8.8 % of said mixture of silica, sodium oxide and aluminum oxide;
- 1.3% of said vulcanization group, in particular 0.52% of said zinc oxide and 0.78% of said accelerator CBS;
- 1.1% of said protective substances;
- 0.2% of said essential oils.

In spite of ignoring the chemical characteristics and the substances contained in the recycled rubber obtained from production processes of tires that has not yet been vulcanized, by mixing the recycled rubber with said polymer base with cross-linked unsaturated chain and with said reinforcing charges, the percentages of toxic substances contained in the rubber mixture is dramatically reduced compared to the ones contained in the recycled rubber obtained from production processes of tires that has not yet been vulcanized. In view of the above, a rubber mixture that fully complies with the specifications of Regulation (EC) 1907/2006 (Reach) is obtained.

In order to analyze the rubber mixture according to the invention, chemical tests were performed to measure the presence of harmful substances in the rubber mixture, as well as physical tests to assess the mechanical properties of the rubber mixture.

The chemical tests demonstrated that:
- the percentage of alkylphenols and alkylphenol ethoxylates contained in the rubber mixture according to the invention is much lower than the one required by the Reach Regulation, i.e. lower than 1,000 mg/Kg;
- the percentage of polycyclic aromatic hydrocarbons (PAH) contained in the rubber mixture according to the invention complies with the parameters of the Reach Regulation for the specific field of use of the rubber mixture;
- the percentage of phthalates contained in the rubber mixture according to the invention is ten times lower than the limit value of the Reach Regulation.

Furthermore, the rubber mixture according to the invention, which is used to obtain the rubber sheet suitable for being processed to make a bag, does not contain the characteristic substances that are typically used in the leather industry to protect leather from the attack of bacterial agents.

Moreover, the rubber mixture cannot be biologically attacked by microorganisms that can degrade over time and damage the quality and the appearance of leather.

Additionally, the rubber mixture does not contain short chain chlorinated paraffins, which are organic compounds used as flame-proof agents and finishing agents in the leather industry and in general. These compounds are extremely toxic because they are easily accumulated in the environment and in living beings.

The physical tests demonstrated that:
- the rubber mixture has a natural, high bending strength;
- the rubber mixture has high aging-resistance properties;
- the hardness of the rubber mixture is comprised between 65 and 75 Shore;
- the rubber mixture has a high elasticity value and a high tearing resistance also in case of very low thickness.

The advantages of the present invention are manifest after the preceding description.

In particular, the rubber mixture according to the present invention can be used to obtain a rubber sheet used to produce a motorcycle bag that:
- has the same aesthetic features and the same use as real leather;
- has better mechanical properties than real leather;
- is easy to process (i.e. cut and sewn); in particular, because of its hardness, a rubber sheet obtained with said rubber mixture can be cut and sewn accurately;
- has a better, less penetrating odor than real leather;
- is cheaper than real leather.

In view of the above, and also in view of the results of the experimental tests, it can be easily understood that such a rubber mixture can be extremely useful to produce rubber sheets that can be used in the field of motorcycle accessories, design and the like.

An additional object of the present patent application is a vulcanized rubber sheet made with the mixture of the present invention.

Another object of the present patent application is a bag, in particular a motorcycle bag obtained by processing (cutting and sewing) one or more sheets made with the mixture of the invention.

In addition to said bag, said sheets obtained with the mixture according to the invention may be used for producing:
- wallets;
- leather accessories; and
- cases for electronic devices, such as tablets or laptops.

Numerous equivalent variations and modifications, which are within the reach of an expert of the field and fall in any case within the scope of the invention as disclosed by the appended claims, can be made to the present embodiment of the invention.

## Claims

1. Rubber mixture used for making a vulcanized rubber sheet suitable for being manipulated and processed to produce a bag; said mixture comprising:
- recycled rubber obtained from production processes of tires that has not yet been vulcanized;
- a polymer base with cross-linked unsaturated chain comprising natural polyisoprene (natural rubber) and styrene butadiene (or synthetic rubber SBR);
- reinforcing charges;
- a vulcanization group that favors a vulcanization of the mixture;
- protective substances improving aging, protecting the rubber mixture against weather agents and giving a good ozone resistance to the rubber mixture;
wherein
said recycled rubber is present in the mixture in a percentage comprised between 55% and 65%;
said polymer base is present in the mixture in a percentage comprised between 20% and 30%.

2. The mixture of claim 1, wherein said reinforcing charges comprise a mixture of silica, sodium oxide and aluminum oxide.

3. The mixture of any one of the preceding claims, wherein said vulcanization group comprises an activator to activate vulcanization and an accelerator to accelerate vulcanization; said activator comprising zinc oxide; said accelerator comprising CBS accelerator.

4. The mixture of any one of the preceding claims, wherein said protective substances comprise substances, such as 6PPD, wax, TMQ.

5. The mixture of any one of the preceding claims, comprising:
- 59.8% of said recycled rubber;
- 22.8% of said polymer base with cross-linked unsaturated chain;
- 14.8% of said reinforcing charges;
- 1.3% of said vulcanization group;
- 1.1% of said protective substances;
- 0.2% of said essential oils

6. Vulcanized rubber sheet made with a mixture according to any one of the preceding claims.

7. Bag comprising at least one vulcanized rubber sheet according to claim 6.

8. Wallet comprising at least one vulcanized rubber sheet according to claim 6.

9. Leather accessory comprising at least one vulcanized rubber sheet according to claim 6.

10. Electronic device case comprising at least one vulcanized rubber sheet according to claim 6.

11. Laptop case comprising at least one vulcanized rubber sheet according to claim 6.

12. Tablet case comprising at least one vulcanized rubber sheet according to claim 6.

## Patentansprüche

1. Gummimischung zur Herstellung eines vulkanisierten Gummituches, das geeignet ist, gehandhabt und zur Herstellung einer Tasche bearbeitet zu werden; wobei die Mischung Folgendes umfasst:
- recyceltes Gummi, das aus den Produktionsprozessen von Reifen stammt und noch nicht vulkanisiert wurde;
- eine Polymerbasis mit vernetzbarer, ungesättigter Kette, umfassend natürliches Polyisopren (Naturkautschuk) und Styrol-Butadien (oder Synthese-Kautschuk, SBR);
- Verstärkungsmittel;
- eine Vulkanisationsgruppe, die die Vulkanisation der Mischung begünstigt;
- Schutzstoffe, die die Alterung verbessern, die Gummimischung vor Witterungseinflüssen schützen und der Mischung eine gute Ozonbeständigkeit verleihen;
wobei
der recycelte Gummi in einem Prozentsatz zwischen 55 % und 65 % in der Mischung vorhanden ist;
die Polymerbasis in einem Prozentsatz zwischen 20 % und 30 % in der Mischung vorhanden ist.

2. Mischung nach Anspruch 1, wobei die Verstärkungsmittel eine Mischung aus Kieselsäure, Natriumoxid und Aluminiumoxid umfassen.

3. Mischung nach einem der vorstehenden Ansprüche, wobei die Vulkanisationsgruppe einen Aktivator zur Aktivierung der Vulkanisation und einen Beschleuniger zur Beschleunigung der Vulkanisation umfasst; wobei der Aktivator Zinkoxid umfasst; wobei der Beschleuniger CBS-Beschleuniger umfasst.

4. Mischung nach einem der vorstehenden Ansprüche, wobei die Schutzstoffe Stoffe wie 6PPD, Wachs, TMQ umfassen.

5. Mischung nach einem der vorstehenden Ansprüche, umfassend:
- 59,8 % recyceltes Gummi;
- 22,8 % Polymerbasis mit vernetzbarer, ungesättigter Kette;
- 14,8 % Verstärkungsmittel;
- 1,3 % Vulkanisationsgruppe;
- 1,1 % Schutzstoffe;
- 0,2 % essenzielle Öle.

6. Vulkanisiertes Gummituch, das aus einer Mischung nach einem der vorstehenden Ansprüche hergestellt ist.

7. Tasche, umfassend mindestens ein vulkanisiertes Gummituch nach Anspruch 6.

8. Geldbörse, umfassend mindestens ein vulkanisiertes Gummituch nach Anspruch 6.

9. Leder-Accessoire, umfassend mindestens ein vulkanisiertes Gummituch nach Anspruch 6.

10. Smartphone-Schutzhülle, umfassend mindestens ein vulkanisiertes Gummituch nach Anspruch 6.

11. Laptop-Schutzhülle, umfassend mindestens ein vulkanisiertes Gummituch nach Anspruch 6.

12. Tablet-Schutzhülle, umfassend mindestens ein vulkanisiertes Gummituch nach Anspruch 6.

## Revendications

1. Mélange de caoutchouc pour la réalisation d'une feuille de caoutchouc vulcanisé destinée à être manipulée et traitée pour la réalisation d'un sac ; ledit mélange comprenant :
- du caoutchouc recyclé provenant du recyclage productif des pneus qui n'ont pas été vulcanisés;
- une base polymérique à chaîne insaturée réticulable comprenant du polyisoprène naturel (caoutchouc) et du butadiène-styrène (ou caoutchouc synthétique SBR) ;
- des charges renforçantes ;
- un groupe de vulcanisation qui permet de favoriser un phénomène de vulcanisation du mélange ;
- des substances protectrices qui améliorent le vieillissement, protègent le mélange contre les agents atmosphériques et confèrent au mélange une bonne résistance à l'ozone ;
où
ledit caoutchouc recyclé est présent dans le mélange avec un pourcentage compris entre 55% et 65% ;
ladite base polymérique est présente dans le mélange dans un pourcentage compris entre 20% et 30%.

2. Mélange selon la revendication 1, où lesdites charges renforçantes comprennent un mélange de silice, d'oxyde de sodium et d'oxyde d'aluminium.

3. Mélange selon l'une quelconque des revendications précédentes, où ledit groupe de vulcanisation comprend un activateur qui active le phénomène de vulcanisation et un accélérateur qui accélère le phénomène de vulcanisation ; ledit activateur comprenant de l'oxyde de zinc ; ledit accélérateur comprenant l'accélérateur CBS.

4. Mélange selon l'une quelconque des revendications précédentes, où lesdites substances protectrices comprennent des substances telles que le 6PPD, la cire, le TMQ.

5. Mélange selon l'une quelconque des revendications précédentes, comprenant :
- 59,8% du susdit caoutchouc recyclé ;
- 22,8% de la susdite base polymérique à chaîne insaturée réticulable ;
- 14,8% des susdites charges renforçantes ;
- 1,3 % du susdit groupe de vulcanisation ;
- 1,1 % des susdites substances protectrices
- 0,2 % des susdites huiles essentielles.

6. Feuille de caoutchouc vulcanisé réalisée avec un mélange selon l'une quelconque des revendications précédentes.

7. Sac comprenant au moins une feuille de caoutchouc vulcanisé selon la revendication 6.

8. Portefeuille comprenant au moins une feuille de caoutchouc vulcanisé selon la revendication 6.

9. Accessoire pour maroquinerie comprenant au moins une feuille de caoutchouc vulcanisé selon la revendication 6.

10. Etui pour dispositif électronique comprenant au moins une feuille de caoutchouc vulcanisé selon la revendication 6.

11. Housse pour ordinateur portable comprenant au moins une feuille de caoutchouc vulcanisé selon la revendication 6.

12. Pochette pour tablette comprenant au moins une feuille de caoutchouc vulcanisé selon la revendication 6.
